# EUROPÄISCHE PATENTSCHRIFT

(11) **EP 0 398 306 B1**
(45) Veröffentlichungstag und Bekanntmachung des Hinweises auf die Patenterteilung: **24.03.1993**
(21) Anmeldenummer: 90109269.2
(22) Anmeldetag: 16.05.1990
(51) Int. Cl.: B65B 31/02

(54) **Vakuum-Kammermaschine**
Vacuum chamber machine
Machine à chambre à vide

(30) Priorität: 18.05.1989 DE 3916170
(43) Veröffentlichungstag der Anmeldung: 22.11.1990
(73) Patentinhaber: MULTIVAC SEPP HAGGENMÜLLER KG, D-87787 Wolfertschwenden (DE)
(72) Erfinder: Natterer, Johann, Dipl.-Ing. (FH), D-8945 Legau (DE)
(74) Vertreter: Prüfer, Lutz H., Dipl.-Phys.

(56) Entgegenhaltungen:
- EP-A- 0 273 066

## Beschreibung

Die Erfindung betrifft eine Vakuum-Kammermaschine mit einer Kammer aus einem Kammerunterteil und einem relativ dazu beweglichen Kammeroberteil zum Aufnehmen eines zu verpackendes Gut enthaltenden Beutels.

Bei derartigen Vakuum-Kammermaschinen wird das in einem Beutel zu verpackende Gut mit dem Beutel in die Kammer eingelegt. Dann wird die Kammer geschlossen und das Kammerinnere und damit auch das Packungsinnere evakuiert und die Packung an ihrem offenen Ende versiegelt und anschließend die Kammer belüftet.

EP-A-273 066 offenbart eine Vakuum-Kammermaschine gemäß dem Oberbegriff des Anspruchs 1.

Bei bekannten Vakuum-Kammermaschinen wird der überschüssige Beutelhals entweder in der Kammermaschine thermisch oder mechanisch abgetrennt und nach dem Öffnen der Kammer von Hand herausgenommen oder erst nachträglich von Hand abgetrennt. Es ist auch bekannt, einen in der Kammer abgetrennten Beutelhals durch Absaugen aus der Kammer zu entfernen. Die Beutelreste werden in einem Sammelbehälter gesammelt, der nach Außen luftdicht verschlossen sein und eine geeignete Abscheidevorrichtung aufweisen muß, um zu verhindern, daß Beutelreste in das Absauggebläse gelangen. Der Oberbegriff des Anspruchs 1 entspricht auch diesem Stand der Technik.

Aufgabe der Erfindung ist es, eine Vakuum-Kammermaschine der eingangs beschriebenen Art zu schaffen, bei der ein überschüssiger Beutelhals automatisch abtrennbar und aus der Kammer abführbar ist, ohne daß die bei einer Absaugeinrichtung auftretenden Probleme bestehen.

Diese Aufgabe wird durch die in Patentanspruch 1 gekennzeichnete Vakuum-Kammermaschine gelöst.

Weiterbildungen der Erfindungen sind in den Unteransprüchen beschrieben.

Weitere Merkmale und Zweckmäßigkeiten der Erfindung ergeben sich aus der Beschreibung eines Ausführungsbeispieles anhand der Figuren. Von den Figuren zeigen:
Fig. 1 einen Querschnitt durch die Vakuum-Kammermaschine;
Fig. 2 eine Draufsicht auf das Kammerunterteil mit darin liegendem versiegelten Beutel und abgetrenntem Beutelhals;
   und
Fig. 3 eine vergrößerte Schnittdarstellung eines Teiles der in Fig. 1 gezeigten Vakuum-Kammermaschine.

Die Kammermaschine weist ein an einem Rahmen 1 befestigtes Unterteil 2 und ein Kammeroberteil 3 auf. Kammerunterteil und Kammeroberteil sind durch ein nicht gezeigtes Gelenk so miteinander verbunden, daß das Kammerinnere durch Aufklappen des Kammeroberteiles zum Einlegen der zu fertigenden Packung öffenbar ist.

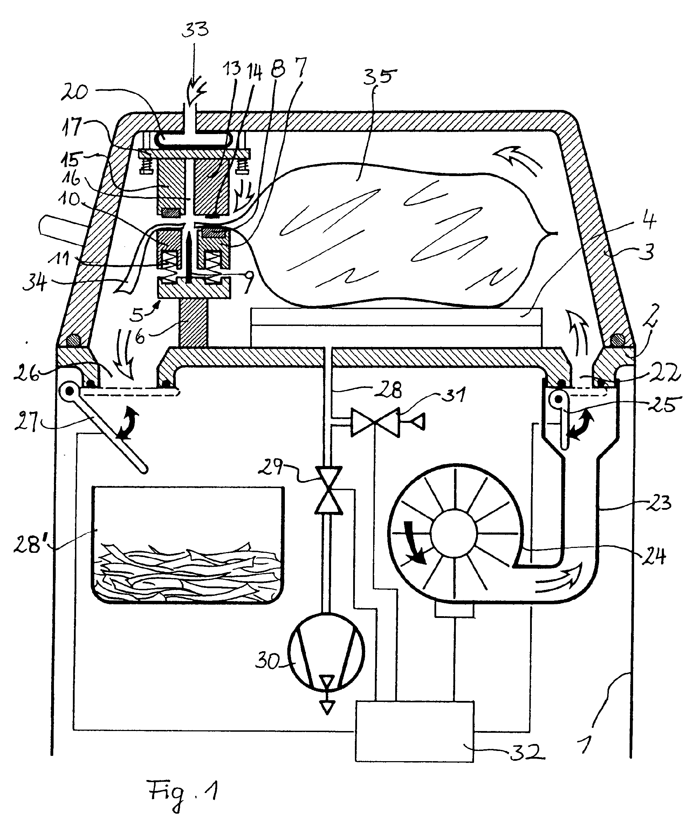

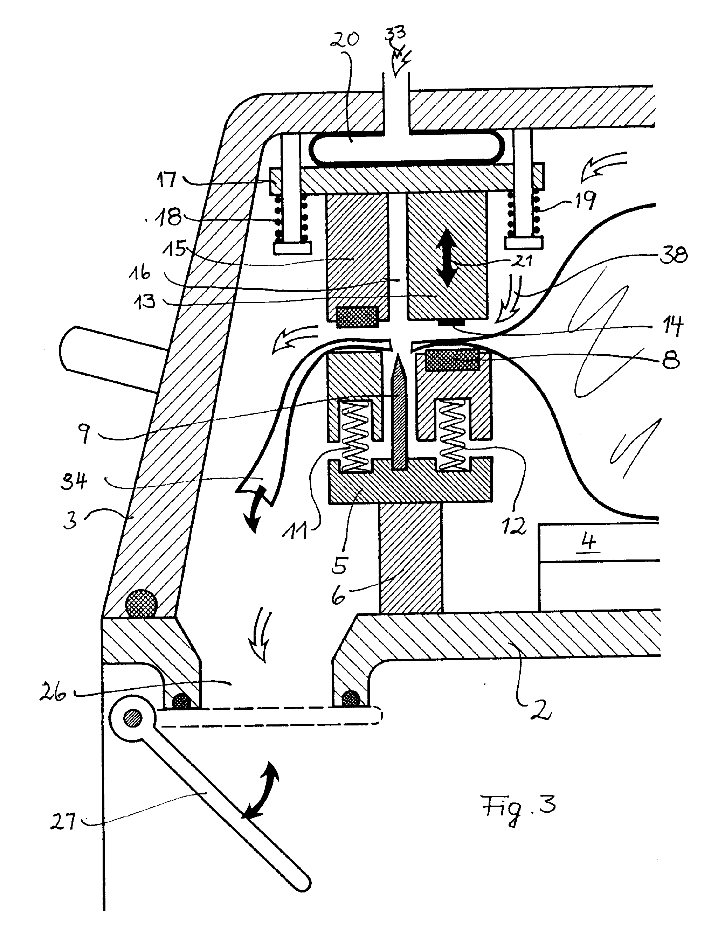

Auf dem Boden des Kammerunterteiles ist eine Auflage 4 zum Aufnehmen des zu verpackenden Gegenstandes vorgesehen. An einer Seite neben dieser Auflage ist das Unterteil 5 der Schneid- und Versiegelungseinrichtung angeordnet. Diese erstreckt sich balkenförmig über nahezu die gesamte Breite des Kammerinneren. Sie weist einen mit dem Boden fest verbundenen unteren Träger 6 auf. Auf diesem ist auf der der Ablage zugewandten Seite ein Widerlager 7 angeordnet, welches auf seiner dem Kammerdeckel zugewandten Oberfläche eine aus Silikongummi gebildete Auflage 8 aufweist. Neben dem Widerlager und auf dessen der Auflage abgewandten Seite ist ein Schneidmesser 9 so fest angeordnet, daß es sich unmittelbar parallel zum Widerlager 7 in einem kleinen Abstand davon erstreckt. Auf der dem Widerlager 7 abgewandten Seite des Schneidmessers 9 ist ein sich parallel zu dem Widerlager 7 und dem Schneidmesser 9 erstreckendes Widerlager 10 angeordnet. Die beiden Widerlager 7,10 sind in der aus den Fig. 1 und 3 ersichtlichen Weise über Federn 11,12 so abgestützt, daß sie in einem solchen Abstand über dem Träger 6 gehalten werden, daß das zwischen den beiden Widerlagern angeordnete Schneidmesser 9 in dem zwischen den beiden Widerlagern gebildeten Spalt eingetaucht ist.

Auf der dem Widerlager 7 gegenüberliegenden Stelle ist im Inneren des Kammeroberteiles 3 ein Balken 13 mit einem der Auflage 8 gegenüberliegenden Siegelelement 14 angeordnet. In einem Abstand von dem Balken 13 und gegenüber dem Widerlager 10 ist ein oberer Niederhalter 15 vorgesehen. Die Balken 13 und oberer Niederhalter 15 sind auf einer gemeinsamen Platte 17 montiert, die auf mit dem Kammeroberteil fest verbundenen Führungen geführt ist und die über Federn 18,19 in die in Fig. 1 und 3 gezeigte zurückgezogene Stellung federvorgespannt ist. Zwischen Kammeroberteil und der Platte 17 ist ein pneumatischer Antrieb in Form einer Membraneinrichtung 20 vorgesehen, der bei Beaufschlagen mit Druckmedium Balken 13 und oberen Niederhalter 15 in Richtung des in Fig. 3 gezeigten Pfeiles 21 auf die beiden Widerlager 7,10 so zubewegt, daß dieser entgegen der Wirkung der Federn 11,12 zum unteren Träger 6 hin soweit gedrückt werden, daß das Schneidmesser 9 aus dem Zwischenraum austaucht und sogar in den Zwischenraum 16 zwischen Balken 13 und oberen Niederhalter 15 eintaucht. Der Ort und die Breite des Zwischenraumes 16 ist dabei so gewählt, daß das Messer ungehindert eintauchen kann.

An dem der Schneid- und Versiegelungseinrichtung abgewandten Ende der Kammer ist zwischen der Auflage 4 und dem Rand der Kammer eine Öffnung 22 vorgesehen. Diese ist über eine Verbindungsleitung 23 mit einem Gebläse 24 verbunden. Zwischen Gebläse und Öffnung ist ein Verschluß 25 in Form einer schwenkbaren Klappe 25 zum Verschließen bzw. freigeben der Öffnung vorgesehen. Auf der entgegengesetzten Seite der Kammer ist zwischen dem unteren Träger 6 und dem Rand der Kammer eine Öffnung 26 vorgesehen, an deren Außenseite ein Verschluß 27 in Form einer schwenkbaren Klappe zum Verschließen bzw. freigeben der Öffnung 26 angeordnet ist. Unterhalb der Öffnung 26 ist ein Behälter 28 zum Aufnehmen von abgetrennten Beutelresten angeordnet. Ferner ist das Kammerinnere über eine Leitung 28 einerseits über ein Ventil 29 mit einer Vakuumpumpe 30 und andererseits über ein Venteil 31 mit Atmosphäre verbindbar. Schließlich ist eine Steuerung 32 vorgesehen, die mit den Ventilen 29,31, dem Gebläse 24, den beiden Verschlüssen 25,27 und der Zufuhr 33 für das Medium zum Betätigen der Membraneinrichtung 20 verbunden.

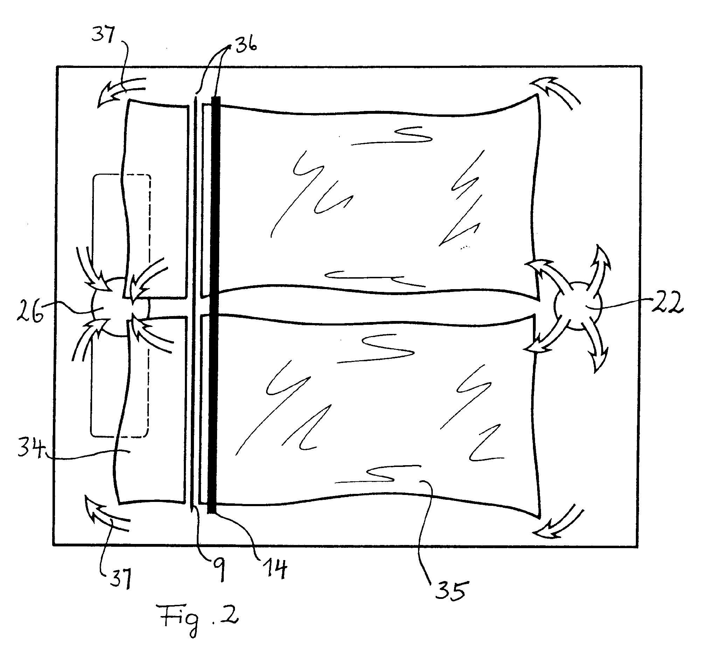

Im Betrieb wird das zu verpackende Gut in einen Beutel gelegt und zusammen mit diesem bei geöffnetem Kammeroberteil in die Kammer in der in Fig. 1 gezeigten Weise so eingelegt, daß der überstehende Beutelhals auf der Auflage 8 des Widerlagers 7 und dem Widerlager 10 aufliegt. Dann wird das Kammeroberteil in die in Fig. 1 gezeigte Stellung zum Schließen der Kammer bewegt, und das Kammerinnere wird über die Vakuumpumpe 30 evakuiert. Nach dem Erreichen eines vorbestimmten Kammerinnendruckes wird die Membraneinrichtung 20 mit Druckluft beaufschlagt, so daß der Balken 13 und der obere Niederhalter 15 in Richtung des Pfeiles 21 entgegen der Federkraft der Federn 18,19 nach unten gedrückt werden und auf den Beutelhals zum Festhalten einwirken. Beim weiteren Niederdrücken in Richtung des Pfeiles 21 werden die Widerlager 7,10 entgegen der Wirkung der Federn 11,12 in die zurückgezogene Stellung zu dem unteren Träger 6 hin bewegt. Die Siegelschiene 14 wird mit einem Spannungspuls beaufschlagt und versiegelt in der am besten aus Fig. 2 ersichtlichen Weise den Beutel über seine gesamte Breite und verschließt diesen damit hermetisch. Gleichzeitig dringt das Schneidmesser 9 aus dem Zwischenraum zwischen den beiden Widerlagern 7,10 zu dem Zwischenraum 16 hin aus und trennt dabei den überstehenden Beutelhals 34 ab.

Anschließend wird die Membraneinrichtung 20 wieder entlüftet, so daß Balken 13 und oberer Niederhalter 15 in die in den Fig. 1 und 3 gezeigte zurückgezogene Stellung zurückbewegt werden. Damit werden sowohl der versiegelte Beutel 35 als auch der abgetrennte Beutelhals 34 freigegeben. Anschließend wird das Kammerinnere über das Ventil 31 belüftet. Sobald im Inneren Atmosphärendruck erreicht ist, werden über die Steuerung 32 die während des oben beschriebenen Vorganges in der in Fig. 1 gezeigten gestrichelten hermetischen Verschlußstellung Klappen in die geöffnete Stellung bewegt. Gleichzeitig wird mit dem Gebläse 24 Blasluft in das Kammerinnere gefördert.

Die Abmessung der Schneid- und Versiegelungseinrichtung ist so gewählt, daß sie sich beinah über die gesamte Kammerbreite erstreckt, wie dies aus dem in Fig. 2 gezeigten Messer und angedeuteten Siegelschiene 14 ersichtlich ist, damit ein sich beinah über die gesamte Kammerbreite erstreckender Beutel vollständig erfaßt und bearbeitet werden kann. Die Bemessung erfolgt aber so, daß zwischen dem jeweiligen seitlichen Rand 36 und der angrenzenden Wandung des Kammeroberteiles ein Spalt von der Art verbleibt, daß ein durch den Pfeil 37 angedeuteter seitlicher Luftstrom vorbei und zur Öffnung 26 zieht. Ferner ist die Vorspannung von Balken 13 und oberem Niederhalter 15 so gewählt, daß zwischen diesen beiden und den gegenüberliegenden Widerlagern 7,10 bzw. einem darauf liegenden Beutelhals in der zurückgezogenen Stellung ein Spalt der Art entsteht, daß eine durch den Pfeil 38 angedeutete Luftströmung auf der ganzen Länge der Siegeleinrichtung auftritt und zusammen mit dem durch den Pfeil 37 angedeuteten seitlichen Luftströmung den abgetrennten Beutelhals 34 zu der Öffnung 26 und durch diese hindurch in den Behälter 28′ fördert. Anschließend werden die schwenkbaren Klappen 25,27 in die gestrichelt gezeigte geschlossene Stellung zurückbewegt. Der fertige Beutel wird der geöffneten Kammer entnommen, und gegebenenfalls wird ein neuer zu verschließender Beutel eingelegt und der Vorgang wiederholt.

## Patentansprüche

1. Vakuum-Kammermaschine mit
einer Kammer aus einem Kammerunterteil
(2) und einem relativ dazu beweglichen Kammeroberteil (3) zum Aufnehmen eines zu verpackendes Gutes enthaltenden Beutels, einer Siegeleinrichtung (7,8,13,14) zum Versiegeln der Beutelöffnung,
einer Schneideeinrichtung (9,10,15) zum Abschneiden des überschüssigen Beutelhalses (34), gekennzeichnet durch
eine verschließbare erste Öffnung (26) zum Herausführen des abgeschnittenen Beutelhalses (34)
und eine Einrichtung (24) zum Zuführen von Blasluft zum Herausblasen des abgeschnittenen Beutelhalses (34) durch die Öffnung (26).

2. Vakuum-Kammermaschine nach Anspruch 1,
dadurch gekennzeichnet, daß die Einrichtung zum Zuführen von Blasluft ein über eine verschließbare zweite Öffnung (22) mit dem Inneren der Kammer verbundenes Gebläse ist.

3. Vakuum-Kammermaschine nach Anspruch 1 oder 2,
dadurch gekennzeichnet, daß das Kammerinnere über eine Leitung (28) mit einem Ventil mit einer Vakuumquelle (30) bzw. ein zweites Ventil (31) mit Atmosphäre verbindbar ist.

4. Vakuum-Kammermaschine nach Anspruch 3,
dadurch gekennzeichnet, daß eine Steuerung (32) zum Steuern der Ventile und des Öffnens bzw. Schließens der beiden Öffnungen und des Gebläses (24) vorgesehen ist.

5. Vakuum-Kammermaschine nach einem der Ansprüche 1 bis 4,
dadurch gekennzeichnet, daß die Siegeleinrichtung ein Widerlager (8) und ein relativ dazu bewegbares Siegelelement (14) aufweist.

6. Vakuum-Kammermaschine nach einem der Ansprüche 1 bis 5,
dadurch gekennzeichnet, daß die Schneideeinrichtung ein Widerlager (10) und einen relativ dazu beweglichen Niederhalter (15) zum Einklemmen des Beutelhalses und ein Schneidemesser (9) aufweist.

7. Vakuum-Kammermaschine nach Anspruch 6,
dadurch gekennzeichnet, daß das Schneidemesser (9) relativ zum Niederhalter oder zum Widerlager so angeordnet ist, daß es in einer inaktiven Stellung oder in einer aktiven Schneidestellung ist.

8. Vakuum-Kammermaschine nach Anspruch 7,
dadurch gekennzeichnet, daß ein Schlitz vorgesehen ist, in dem das Schneidmesser ortsfest angeordnet ist und daß das den Schlitz aufweisende Teil so federnd gelagert ist, daß es durch Zusammenwirken mit dem anderen Teil so bewegt wird, daß das Schneidmesser austaucht.

9. Vakuum-Kammermaschine nach einem der Ansprüche 1 bis 8,
dadurch gekennzeichnet, daß die Siegeleinrichtung und Schneideeinrichtung als sich quer über das Kammerinnere erstreckende Elemente ausgebildet sind und seitlich von sich zwischen Kammerwandung und den Elementen sich erstreckenden Spalten umgeben sind, durch die eine im wesentlichen gleichmäßig hohe Luftströmung zum Fördern eines abgetrennten Beutelrestes zu der Öffnung auftritt.

10. Vakuum-Kammermaschine nach einem der Ansprüche 1 bis 9,
dadurch gekennzeichnet, daß nach dem Durchtrennen des Beutelhalses zwischen Balken und oberem Niederhalter einerseits und den Widerlagern (7,10) über die ganze Balkenbreite ein Spalt gebildet ist, durch den ein Luftstrom zum Zuführen des abgetrennten Beutelhalses zu der Öffnung (26) entsteht.

## Claims

1. Vacuum chamber apparatus comprising a chamber having a chamber bottom member (2) and a chamber top member (3) which is movable relative to the chamber bottom member for receiving a bag containing a product to be packaged, sealing means (7, 8, 13, 14) for sealing the mouth of the bag,
cutting means (9, 10, 15) for cutting off the surplus neck (34) of the bag,
characterized by
a closable first aperture (26) for withdrawing the cut-off neck (34) of the bag
and means (24) for supplying blow air for blowing the cut-off neck (34) of the bag through the aperture (26).

2. Vacuum chamber apparatus according to claim 1, characterized in that the means for supplying blow air is a blower which communicates with the interior of the chamber through a closable second aperture (22).

3. Vacuum chamber apparatus according to claim 1 or 2,
characterized in that the interior of the chamber is adapted to communicate with a vacuum source (30) through a conduit (28) comprising a valve or with the atmosphere through a second valve (31).

4. Vacuum chamber apparatus according to claim 3, characterized in that a control (32) for controlling the valve and the opening or closing, resp., of the two apertures and of the blower (24) is provided.

5. Vacuum chamber apparatus according to any of the claims 1 to 4,
characterized in that the sealing means comprises a counter-pressure device (8) and a sealing member (14) which is movable in relation to the counter-pressure device.

6. Vacuum chamber apparatus according to any of the claims 1 to 5,
characterized in that the cutting means comprises a counter-pressure device (10) and a pressure pad (15) which is movable relative to the counter-pressure device for clamping the neck of the bag therebetween, and a cutting knife (9).

7. Vacuum chamber apparatus according to claim 6,
characterized in that the cutting knife (9) is disposed in relation to the pressure pad or to the counter-pressure device such that it is either in an inactive position or in an active cutting position.

8. Vacuum chamber apparatus according to claim 7,
characterized in that a slot is provided wherein the cutting knife is arranged in a stationary manner, and that the member receiving the slot is resiliently supported such that it is moved by cooperation with the other member such that the cutting knife emerges.

9. Vacuum chamber apparatus according to any of the claims 1 to 8,
characterized in that the sealing means and the cutting means are formed as members extending transversely across the interior of the chamber and are laterally surrounded by gaps extending between the chamber walls and the members, a substantially constant high air stream passing through the gaps for transporting a cut-off remainder of the bag.

10. Vacuum chamber apparatus according to any of the claims 1 to 9,
characterized in that after cutting the neck of the bag a gap is formed between the bar and the upper pressure pad on the one hand and the counterpressure devices (7, 10) on the other hand, the gap extending across the entire width of the bar and causing an air stream therethrough for carrying the cut-off neck of the bag to the aperture (26).

## Revendications

1. Machine à chambre à vide avec une chambre composée d'une partie inférieure de chambre (2) et d'une partie supérieure de chambre (3) mobile par rapport à celle-ci pour recevoir un sachet contenant un produit à emballer, un dispositif de soudage (7, 8, 13, 14) pour le soudage de l'ouverture du sachet, un dispositif de coupe (9, 10, 15) pour découper le collet de sachet (34) excédentaire, caractérisée en ce qu'elle comporte une première ouverture (26) pouvant être fermée pour retirer le collet de sachet (34) découpé et un dispositif (24) pour amener de l'air d'insufflation pour expulser le collet de sachet (34) découpé par l'ouverture (26).

2. Machine à chambre à vide selon la revendication 1, caractérisée en ce que le dispositif pour amener de l'air d'insufflation est une soufflerie reliée par une seconde ouverture pouvant être fermée (22) avec l'intérieur de la chambre.

3. Machine à chambre à vide selon la revendication 1 ou 2, caractérisée en ce que l'intérieur de la chambre peut être relié par une conduite (28) par une soupape avec une source de vide (30) ou par une seconde soupape (31) avec l'atmosphère.

4. Machine à chambre à vide selon la revendication 3, caractérisée en ce qu'une commande (32) pour la commande des soupapes et de l'ouverture ou de la fermeture des deux ouvertures et de la soufflerie (24) est prévue.

5. Machine à chambre à vide selon l'une quelconque des revendications 1 à 4, caractérisée en ce que le dispositif de soudage présente une butée (8) et un élément de soudage (14) mobile par rapport à celle-ci.

6. Machine à chambre à vide selon l'une quelconque des revendications 1 à 5, caractérisée en ce que le dispositif de coupe présente une butée (10) et un dispositif de maintien (15) pour pincer le collet du sachet et un couteau de coupe (9).

7. Machine à chambre à vide selon la revendication 6, caractérisée en ce que le couteau de coupe (9) est disposé par rapport au dispositif de maintien ou à la butée de telle sorte qu'il se trouve dans une position inactive ou dans une position active de coupe.

8. Machine à chambre à vide selon la revendication 7, caractérisée en ce qu'une fente est prévue, dans laquelle le couteau de coupe est disposé de manière fixe et en ce que la partie présentant la fente est supportée de manière élastique de façon à être déplacée par la coopération avec l'autre partie de telle sorte que le couteau de coupe apparaisse.

9. Machine à chambre à vide selon l'une quelconque des revendications 1 à 8, caractérisée en ce que le dispositif de soudage et le dispositif de coupe sont conçus comme des éléments s'étendant transversalement à travers l'intérieur de la chambre et sont entourés latéralement de fentes s'étendant entre la paroi de la chambre et les éléments, à travers lesquelles un courant d'air sensiblement constant passe pour transporter un reste de sachet détaché vers l'ouverture.

10. Machine à chambre à vide selon l'une quelconque des revendications 1 à 9, caractérisée en ce qu'une fente est formée après le détachement du collet du sachet entre la traverse et le dispositif de maintien supérieur d'une part et entre les butées (7, 10) sur toute la largeur de la traverse, à travers laquelle se crée un courant d'air pour acheminer le collet de sachet détaché vers l'ouverture (26).
